# EUROPEAN PATENT APPLICATION

(11) **EP 2 234 019 A1**
(43) Date of publication of application: **29.09.2010**
(21) Application number: 08740635.1
(22) Date of filing: 18.04.2008
(51) Int. Cl.: G06F 13/00

(54) **GRAPHIC INSTRUCTION TRANSMITTER AND METHOD FOR GRAPHIC INSTRUCTION TRANSMISSION**

(30) Priority: 07.12.2007 JP 2007317522
(71) Applicant: Sharp Kabushiki Kaisha, Osaka-shi, Osaka 545-8522 (JP)
(72) Inventor: WATANABE, Ryusuke, Osaka-shi, Osaka 545-8522 (JP); NAKAMURA, Hiroyuki, Osaka-shi, Osaka 545-8522 (JP); SAKAMOTO, Kenji, Osaka-shi, Osaka 545-8522 (JP); SASAKI, Jun, Osaka-shi, Osaka 545-8522 (JP); MATSUYAMA, Satoshi, Osaka-shi, Osaka 545-8522 (JP); UEMICHI, Akio, Osaka-shi, Osaka 545-8522 (JP)
(74) Representative: Müller - Hoffmann & Partner
(86) International application number: PCT/JP2008/057580
(87) International publication number: WO 2009/072312

(57) **Abstract**

In related art, it takes time on a client to receive or draw a graphic element that is not important as data constituting graphics. Optimum graphic data is not transmitted to the client. To solve the above-described problems, the present invention proposes a graphic instruction transmitter having functions of selecting respective instructions constituting entire graphics according to information, such as client instruction execution capability information and information about graphic importance, and transmitting an instruction group generated on the basis of the selected instructions to the client.

## Description

### Field of the Invention

The present invention relates to a transmitter for an instruction concerning graphic, transmitting a group of instructions to draw a screen configured by a plurality of graphic components at the client end.

### Background Art

Recently, many mobile devices exist other than personal computers such as mobile phones or PDA's (Personal Digital Assist), and a client terminal for receiving graphic data has diversified. Generally, these client terminals vary in performance such as the CPU processing performance or special IC. Additionally, recent development of multimedia makes it possible to acquire various graphics data such as still image data or moving image data by electronic device etc. via the network, and the capacity of the graphic data increases with the speed-up of transmission speed of the network.

In such an environment, the graphic data is edited at the server end according to type etc. of the client electronic device. For example, in Japanese Unexamined Patent Application Publication No. 2006-31476, a server reproduces the display environment for the user at the server end, and it is determined at the server end whether Web page, which the user desires to browse, is displayed without problem. If there is a problem, the server transmits Web page data, which is appropriately modified. According to this server, the client can surely perform easily viewable display suitable for the environment for the client irrespective of description language of the Web page or property of the browser.
Patent Reference 1: Japanese Unexamined Patent Application Publication No. 2006-31476

### Disclosure of the Invention

### Problems that the Invention Tries to Solve

However, in the above conventional technology, when the client has a minimum ability of drawing the graphic component, the graphic data including the instruction to draw the graphic component is transmitted. Therefore, it takes time at the server end to receive or draw the graphic component, which is not so important, and this is not transmission of most suitable graphic data.

### Means for Solving the Problems

In order to solve the above deficiencies, a transmitter for instruction concerning graphic of the present invention having the functions of acquiring information of ability to execute an instruction to draw a graphic component from the client, selecting the instruction to configure the entire graphic according to the information of ability to execute the instruction and information of importance of the graphic, and transmitting a group of instructions generated based on the selection, is provided.

### Effects of the Invention

According to the present invention, the respective instructions are selected in consideration of the importance of the graphic components, thereby preventing unnecessary consumption of the processing capacity of the client in comparison with the conventional technology.

### BRIEF DESCRIPTION OF THE DRAWINGS

Fig. 1 is a schematic diagram of a first embodiment.
Fig. 2 is a functional block diagram of a transmitter for instruction concerning graphic of the first embodiment.
Fig. 3 is a diagram showing an example of information of ability to execute instruction acquired by the transmitter for instruction concerning graphic of the first embodiment.
Fig. 4 is a diagram showing an example of an instruction to draw a graphic component stored in the transmitter for instruction concerning graphic of the first embodiment.
Fig. 5 is a diagram showing an example of information of ability to execute instruction of a client, which carried out a transmission request of graphic data to the transmitter for instruction concerning graphic of the first embodiment.
Fig. 6 is a diagram showing an example of the graphic data, which is a target of the transmission request from the client to the transmitter for instruction concerning graphic of the first embodiment.
Fig. 7 is a diagram showing the graphic to be drawn when executing the graphic data of Fig. 6.
Fig. 8 is a diagram showing the graphic data configured based on the information of ability to execute instruction of the client 1.
Fig. 9 is a diagram showing the graphic to be drawn when executing the graphic data of Fig. 8.
Fig. 10 is a diagram showing a concrete configuration of the transmitter for instruction concerning graphic of the first embodiment.
Fig. 11 is a flowchart showing processes in the transmitter for instruction concerning graphic of the first embodiment.
Fig. 12 is a functional block diagram of the transmitter for instruction concerning graphic of a second embodiment.
Fig. 13 is a diagram showing an example of support information stored in the transmitter for instruction concerning graphic of the second embodiment (when 'property of instruction' is tag type).
Fig. 14 is a diagram showing an example of an instruction, to which a new attribute has been given, stored in the transmitter for instruction concerning graphic of the second embodiment.
Fig. 15 is a diagram showing an example of support information stored in the transmitter for instruction concerning graphic of the second embodiment (when 'property of instruction' is importance of component).
Fig. 16 is a diagram showing an example of the graphic data, which is a target of the transmission request from the client to the transmitter for instruction concerning graphic of the second embodiment.
Fig. 17 is a diagram showing the graphic data configured based on the information of ability to execute instruction of the client 1 and the support information.
Fig. 18 is a diagram showing the graphic data configured based on the information of ability to execute instruction of the client 2 and the support information.
Fig. 19 is a diagram showing the graphic to be drawn when executing the graphic data of Fig. 18.
Fig. 20 is a diagram showing a concrete configuration of the transmitter for instruction concerning graphic of the first embodiment.
Fig. 21 is a flowchart showing processes in the transmitter for instruction concerning graphic of the first embodiment.

### Description of Reference Numerals

0200 Transmitter for an instruction concerning graphic
0201 Acquirer for information of ability to execute instruction
0202 Storage for instruction
0203 Selector for instruction
0204 Configuration unit for group of instructions
0205 Transmitter for group of instructions

### DETAILED DESCRIPTION OF THE INVENTION

Hereinbelow, embodiments of the present invention will be described. Relations between the embodiments and claims are as follows. The first embodiment will mainly describe Claims 1 and 3. The second embodiment will mainly describe Claims 2 and 4. The present invention is not to be limited to the above embodiments and able to be embodied in various forms without departing from the scope thereof.

### <<First Embodiment>>

### <Concept of First Embodiment>

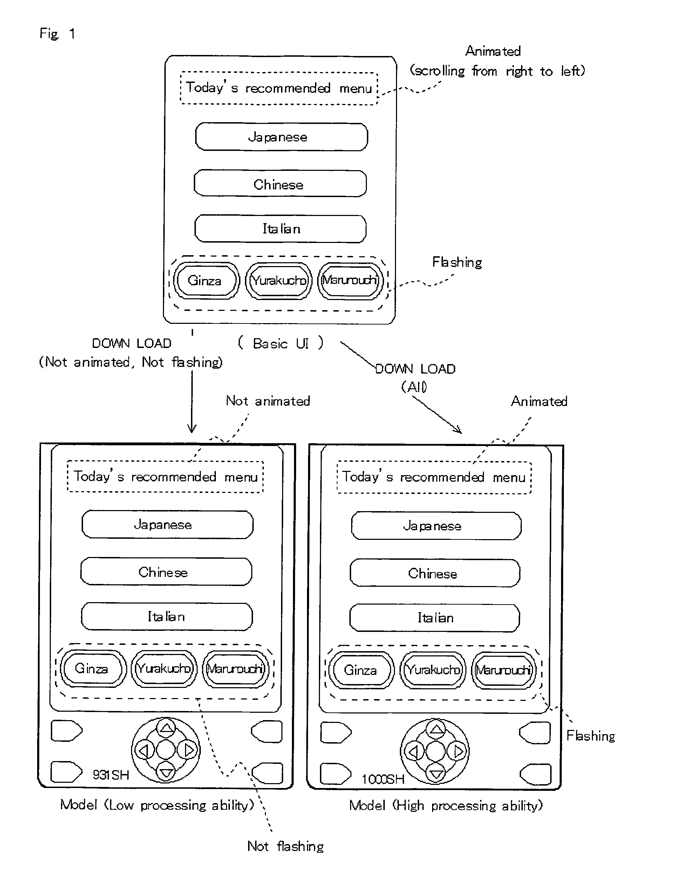

A transmitter for instruction concerning graphic of a first embodiment has the functions of acquiring information of ability to execute an instruction to draw a graphic component from the client, selecting the instruction to configure the entire graphic according to the information of ability to execute the instruction and information of importance of the graphic, and transmitting a group of instructions generated based on the selection. Fig. 1 is a schematic diagram of the transmitter for instruction concerning graphic of the first embodiment. Here, the case that the transmitter for instruction concerning graphic receives the transmission request of user interface (UI) data from two client terminals, which have different processing abilities, is described. Although both terminals can execute the UI data stored in the transmitter for instruction concerning graphic, the low-processing ability model needs long time to execute a specific graphic instruction such as animation. In this case, the transmitter for instruction concerning graphic of the first embodiment can select each instruction, not including the instruction requiring long processing time, thereby transmitting a group of instructions concerning graphic based on the selection to the low-processing ability model. Therefore, it is possible to prevent unnecessary consumption of the processing capacity of the client in comparison with the conventional technology.

### <Configuration of First Embodiment>

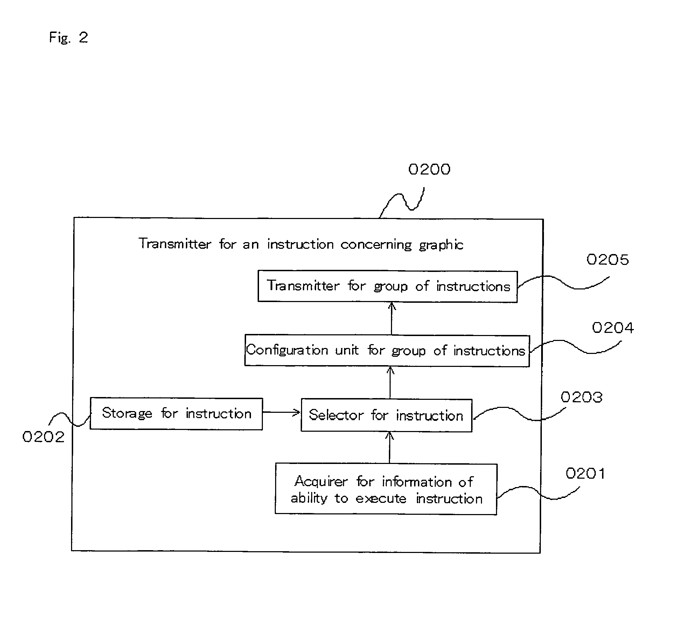

Fig. 2 is a functional block diagram of the transmitter for instruction concerning graphic of the first embodiment. The respective units of the present invention can be configured by hardware, software, or both hardware and software. For example, in the case of using a computer, the respective units are implemented by the hardware configured by a CPU, a memory, a bus, an interface, and other peripheral devices etc., and by the software operable on the hardware. Concretely speaking, by sequentially carrying out programs in the memory, the data in the memory and the data inputted via the interface are processed, stored, and outputted etc., thereby implementing functions of the respective units.

In Fig. 2, a 'transmitter for instruction concerning graphic' 0200 of the first embodiment comprises an 'acquirer for information of ability to execute instruction' 0201, a 'storage for instruction' 0202, a 'selector for instruction' 0203, a 'configuration unit for group of instructions' 0204, and a 'transmitter for group of instructions' 0205. Moreover, the present invention can be implemented not only as an apparatus but also as a method (the same applies throughout the entire specification).

The 'acquirer for information of ability to execute instruction' is configured to acquire information of ability to execute instruction, which is information indicating an ability of a client to execute an instruction to draw a graphic component with respect to each graphic component.

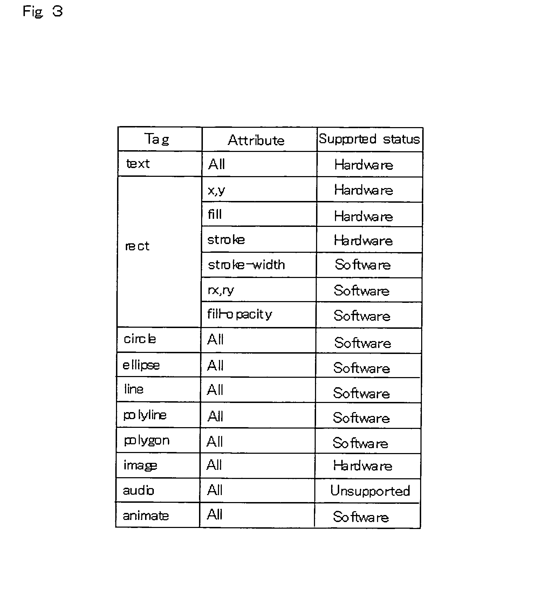

Here, as the 'information of ability to execute instruction', the information as shown in Fig. 3 can be used. In Fig. 3, a 'tag' indicates type of graphic component, which can be included in the graphic data, and an 'attribute' indicates property, which can be specified for each graphic component. Additionally, a 'support status' indicates whether or not the client has an ability to execute each tag or attribute, or how the client can execute. Specifically, at the client end, all attributes of the 'text' tag indicating instruction to draw the text data are supported by hardware, but 'stroke-width' attribute included in 'react' tag is supported by software. All attributes of 'audio' tag are unsupported.

As the method for acquiring the information of ability to execute instruction, for example, the following method can be provided. At the outset, the client transmits the information of ability to execute instruction of itself to the transmitter for instruction concerning graphic, and registers the information. The transmitter for instruction concerning graphic associates the ability to execute instruction with a client ID, and stores them in the storage, and transmits the ID to the client. The client transmits the transmission request of the graphic data with its client ID upon transmitting the transmission request, so that the transmitter for instruction concerning graphic can acquire the ability to execute instruction of the client from the storage.

Moreover, as the other method, each client transmits model name and version information of software etc. to the transmitter for instruction concerning graphic, and the transmitter for instruction concerning graphic acquires the ability to execute instruction of each client from the information of ability to execute instruction, which has been correlated with the above information and stored in the storage.

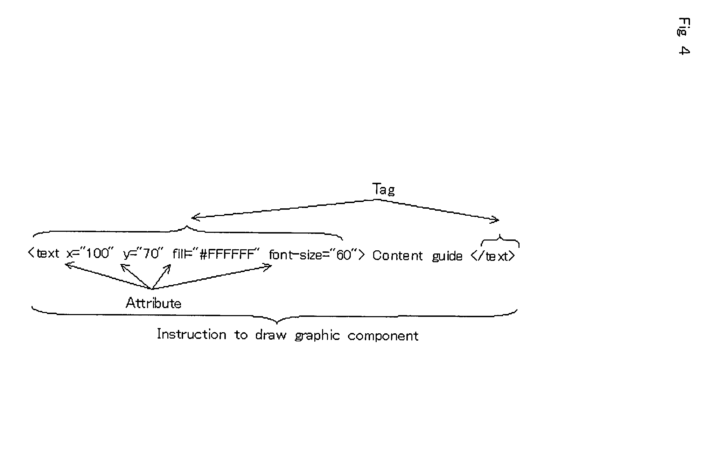

The `storage for instruction' is configured to associate the instruction for the client to draw the graphic component with the graphic component to be drawn, and executing storage thereof. For example, in Fig. 4, the <text> tag indicates an instruction to draw text component, and is correlated with the graphic component for displaying the text data and is stored. In this case, letters of 'content guide' are drawn. Here, 'x', 'y', 'fill' and 'font-size' indicate attribute concerning the tag, and each of them is instruction to specify X-coordinate of a starting point for drawing the text, Y-coordinate of the starting point for drawing the text, color of the text and font size of the text.

The 'selector for instruction' is configured to select the instruction with respect to each graphic component according to the information of ability to execute instruction in order to configure a group of instructions for generating a screen configured by a plurality of graphic components. For example, when the tag and attribute included in the instruction are unsupported at the client end, it is possible to not select the tag and attribute. In the client in Fig. 3, only the <audio> tag is unsupported at the client end, so that the instruction including the <audio> tag is not selected, and other instructions can be selected. Moreover, only when the tag and attribute included in the instruction are supported by hardware, the instruction may be selected. For example, the 'x, y', 'fill' and 'stroke' of the <rect> tag are supported only by hardware, so that they are selected, and the 'storke-width', 'rx, ry' and 'fill-opacity' are supported by software, so that they are not selected. This configuration makes it possible to select only the graphic component, which is supported by hardware and can be displayed at high-speed at the client end.

The 'configuration unit for group of instructions' configures the group of instructions according to the selection. In the method for 'configures the group of instructions according to the selection', for example, when a transmission request for the graphic data is sent from the client, new graphic data is configured from the graphic data stored in the storage for instruction, so that only the instruction selected by the selector for instruction is left. Moreover, new graphic data with a specific instruction (e.g., instruction of comment out) may be configured in order to invalid the instructions, which have been not selected by the selector for instruction.

The 'transmitter for group of instructions' transmits the configured group of instructions. As the method for 'transmitting the configured group of instructions', transmission to the client via the network or wireless transmission may be used.

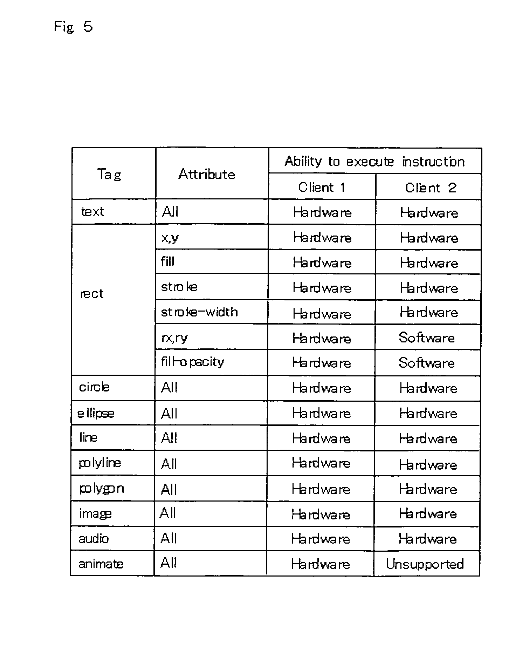

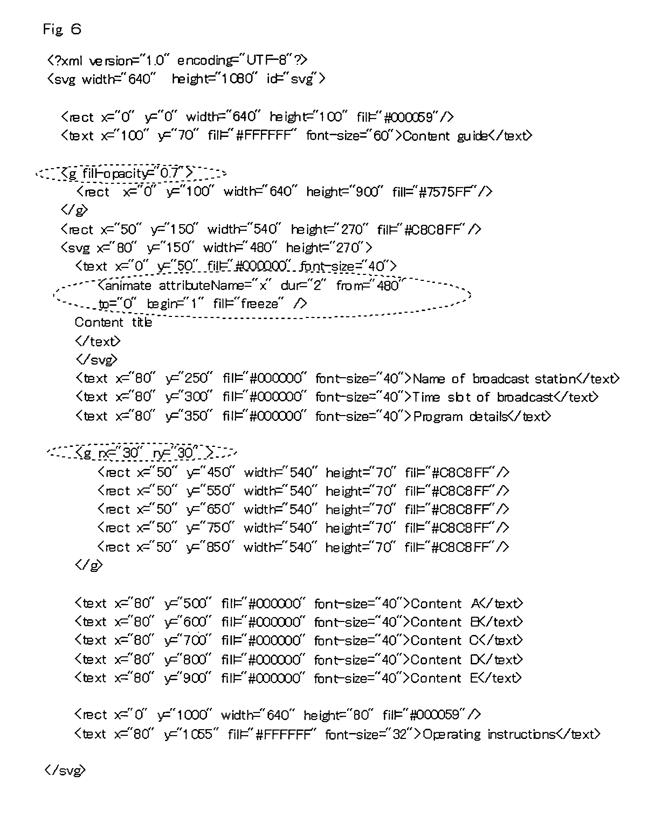

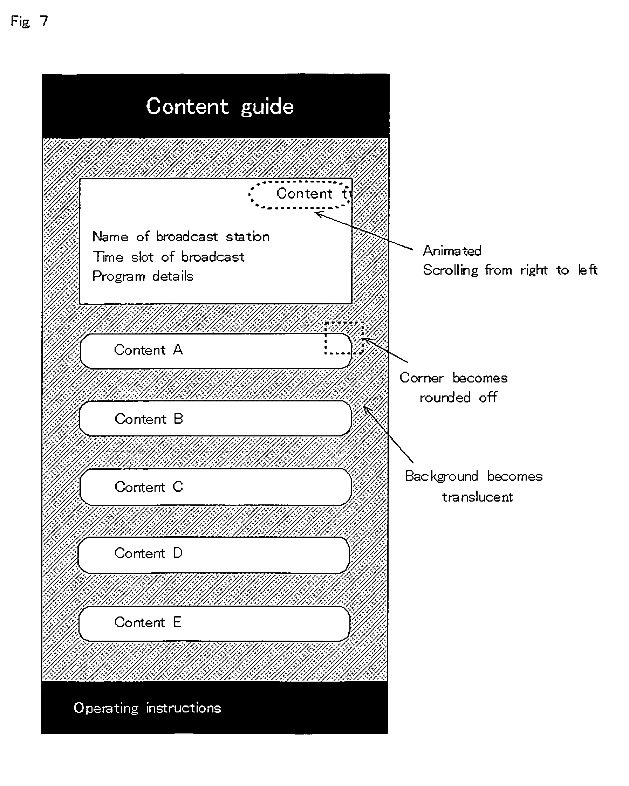

Concretely description of difference between graphics drawn by clients having different abilities to execute instruction is provided. It is assumed that each client has ability to execute instruction as shown in Fig. 5. The clients 1 and 2 have different abilities to execute instruction as to the <rx, ry> and <fill-opacity> attributes of the <rect> tag, and the <animate> tag. The <rx, ry> attribute of the <rect> tag is attribute for making four corners of a square rounded off, and the <fill-opacity> attribute is attribute for making background translucent. Additionally, the <animate> tag is a tag concerning an animation function, and enables scroll of letters etc. Here, it is assumed that the transmission requests are sent from different clients for the XML data as shown in Fig. 6. The XML data includes instruction, for which each client has a different ability to execute. If the XML data is executed without change, the graphic as shown in Fig. 7 is displayed.

As shown in Fig. 5, at the client 1, all instructions included in the XML data are supported by hardware. Therefore, even when the selector for instruction selects only the graphic component supported by hardware, the all instructions are selected. Accordingly, the XML data for the client 1, which is configured by the selector for instruction, is not different from the XML data in Fig. 6, which originally exists in the storage for instruction. Therefore, the graphic displayed at the client 1 is the same as that in Fig. 7.

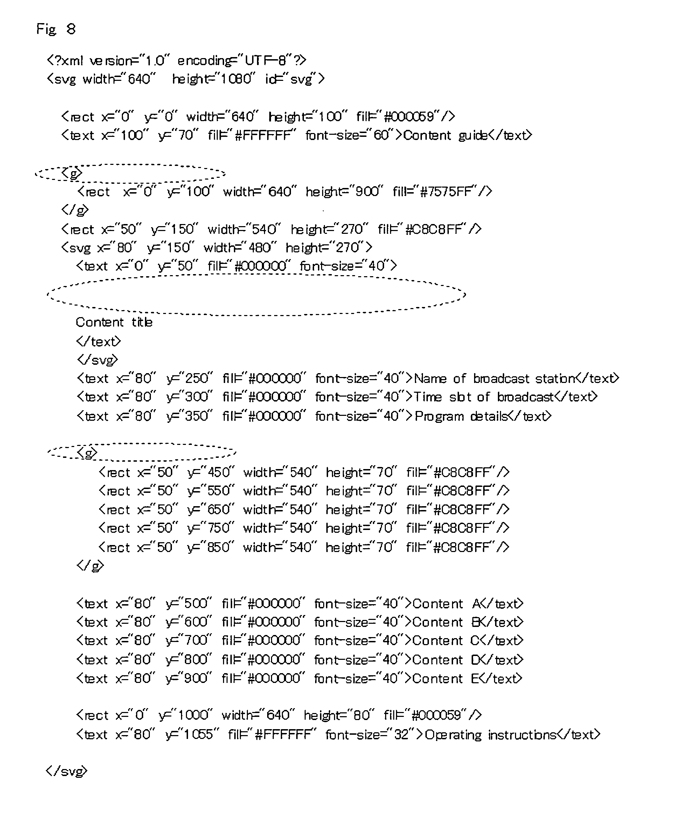

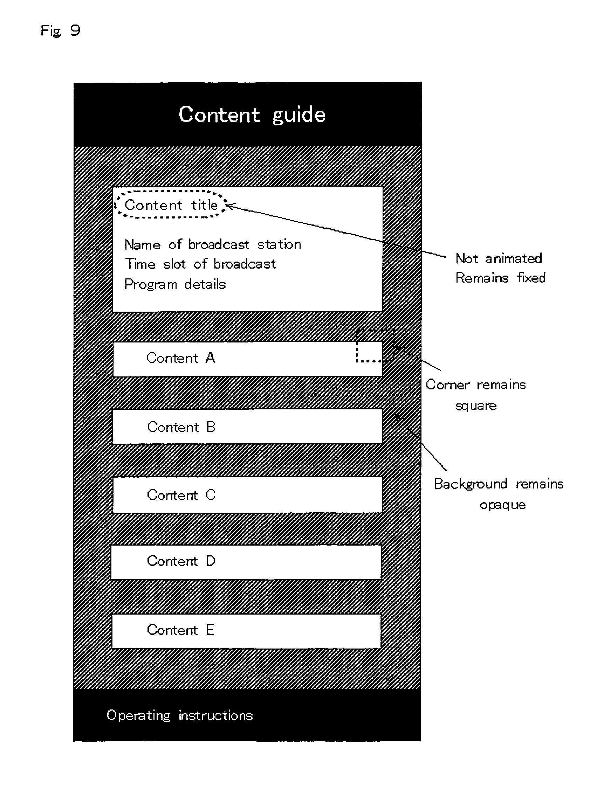

Subsequently, when each instruction is selected from instructions configuring the XML data in the storage for instruction based on the information of ability to execute instruction of the client 2 in Fig. 5, the XML data in Fig. 8 is configured. At the client 2, the <rx, ry> and <fill-opacity> attributes of the <rect> tag are supported by software, and the <animate> tag is unsupported, so that these instructions are not selected. Therefore, if the XML data for the client 2 is executed, the graphic as shown in Fig. 9 is displayed.

Note that, in the above case, it is 'selected' whether or not the instruction for each graphic component configuring the graphic is left as the data to be transmitted to the client, thereby configuring the group of instructions. When a plurality of instructions preliminarily exist as choices for each graphic component, it is possible to 'select' a specific instruction form the choices, thereby configuring the group of instructions.

### <Concrete Configuration of First Embodiment>

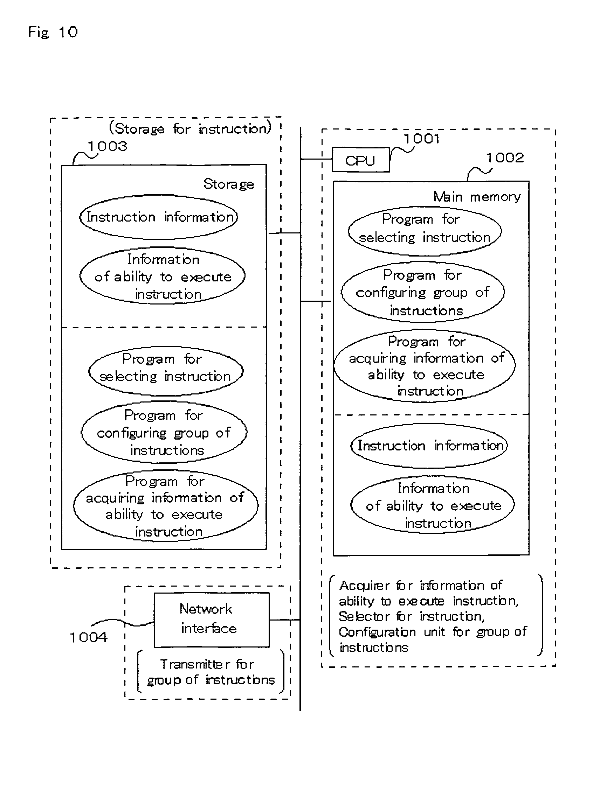

Subsequently, the respective hardware configurations of the transmitter for instruction concerning graphic of the first embodiment will be described. Fig. 10 is a schematic diagram showing an example of a hardware configuration of the transmitter for instruction concerning graphic of the first embodiment. As shown in Fig. 10, the acquirer for information of ability to execute instruction, the selector for instruction and the configuration unit for group of instructions comprise a 'CPU' 1001 and a 'main memory' 1002. The storage for instruction comprises a 'storage (or storage medium)' 1003. Moreover, the transmitter for group of instructions comprises a 'network interface' 1004. These are mutually connected through the data communication path of a 'system bus' 0407, thereby carrying out transmission/reception and processing of the information.

The storage carries out nonvolatile storage of various programs executed by the CPU. The main memory provides work area used upon execution of the programs by the CPU, and temporarily stores the cached graphic information. In addition, a plurality of memory addresses are assigned to the main memory and the storage respectively, so that the program executed by the CPU specifies the memory address and accesses thereto, thereby mutually exchanging data and carrying out processing. Moreover, in the description below, although the program is preliminarily developed and resident in the work area of the main memory, it is possible to call the program from the storage as necessary.

In the network interface, when receiving the transmission request for the group of instructions concerning graphic and the client ID from the client, a program for acquiring information of ability to execute instruction stores a table of information of ability to execute instruction stored in the storage at a predetermined address in the main memory, searches for information correlated with the client ID, and extracts the information into another predetermined address in the main memory. Note that, in this case, although the information of ability to execute instruction of the client is preliminarily correlated with each client ID and is stored in the storage, it is also possible to acquire the information of ability to execute instruction directly from the client simultaneously with the reception of the transmission request for the group of instructions concerning graphic.

When the information of ability to execute instruction of the client, which has sent the transmission request, is stored in the main memory, a program for selecting instruction acquires the group of instructions concerning graphic as the target of the transmission request from the storage, and stores the group of instructions at a predetermined address in the main memory. Note that the group of instructions concerning graphic can be externally acquire via the network interface. After that, based on the information of ability to execute instruction, the program for selecting instruction executes a processing for determining whether or not each instruction indicating the graphic component is selected. In the processing for determination as to the selection of instruction, it is possible to not select the instruction when minimum ability to execute instruction is not provided, or to not select the instruction when the ability to execute instruction falls to short of a predetermined standard. The predetermined standard can be set by the transmitter for instruction concerning graphic.

A program for configuring group of instructions causes the CPU to execute a processing for configuring the group of instructions concerning graphic based on the processing result of the above program for selecting instruction. The configured group of instructions concerning graphic is transmitted to the client, which has sent the transmission request, via the network interface.

### <Processing Flow of First Embodiment>

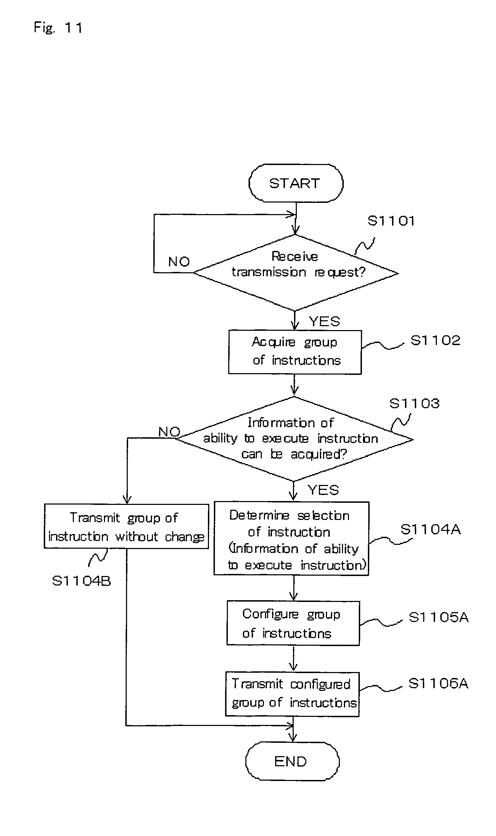

Fig. 11 is a flowchart showing processes in the transmitter for instruction concerning graphic of the first embodiment. Here, a step of associating the instruction for the client to draw the graphic component with the graphic component to be drawn, and executing storage thereof is already executed. The processes in Fig. 11 include the following steps. At the outset, in step S1101, it is determined whether the transmission request for the graphic data from the client has been received. Here, if it is determined that the transmission request for the graphic data has been received, step S 1102 is carried out. If it is determined that the transmission request for the graphic data has not been received, the processing stays in a standby state. In step S0502, the group of instructions, which is a target of the transmission request from the client, is acquired from the storage for instructions. In step S1103, it is determined whether or not the information of ability to execute instruction of the client, which has sent the transmission request, can be acquired. Here, if it is determined that the information of ability to execute instruction can be acquired, step S1104A is carried out. If it is determined that the information of ability to execute instruction cannot be acquired, step S1104B is carried out. This processing is mainly carried out by the acquirer for information of ability to execute instruction. In the step S1104B, the group of instructions acquired from the storage for instructions is transmitted to the client without change, and the processing is terminated. In the step S1104A, it is determined according to the information of ability to execute instruction whether or not the instruction concerning each graphic component configuring the graphic screen is selected. This processing is mainly carried out by the selector for instructions. In step S1105A, the group of instructions to draw the graphic screen is configured according to the selection by the selector for instructions. This processing is mainly carried out by the configuration unit for group of instructions. In step S1106A, the group of instructions configured by the configuration unit for group of instructions is transmitted to the client, which has sent the transmission request. This processing is mainly carried out by the transmitter for group of instructions.

The above processes can be executed by the program to cause a computer to execute, and the program can be recorded in a recording medium readable by the computer (the same applies to the entire specification).

### <Brief Description of Effects of First Embodiment>

According to the transmitter for instruction concerning graphic of the first embodiment, when the instruction concerning the graphic component, for which the client has low-ability to draw, is included in the graphic data, it is possible to configure the graphic data not including such instruction even if the ability to execute instruction is provided, and to transmit the graphic data to the client, thereby preventing unnecessary consumption of the processing capacity of the client in comparison with the conventional technology.

### <<Second Embodiment>>

### <Concept of Second Embodiment>

A transmitter for instruction concerning graphic of a second embodiment is basically same as that of the first embodiment, and different from that in determining whether or not the instruction is to be selected according to a property of each instruction in addition to the ability of an arbitrary client to execute each instruction.

### <Configuration of Second Embodiment>

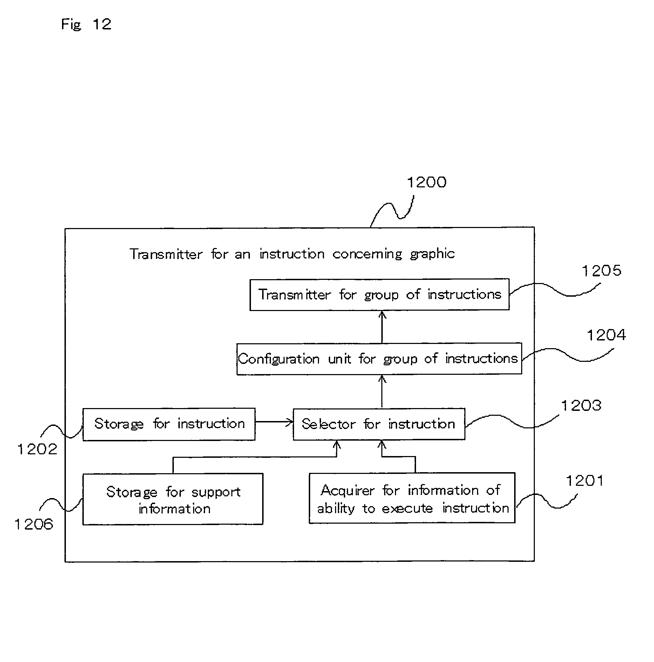

Fig. 12 is a functional block diagram of the transmitter for instruction concerning graphic of the second embodiment. In Fig. 12, a 'transmitter for instruction concerning graphic' 1200 of the second embodiment comprises an 'acquirer for information of ability to execute instruction' 1201, a 'storage for instruction' 1202, a 'selector for instruction' 1203, a 'configuration unit for group of instructions' 1204, a 'transmitter for group of instructions' 1205, and a 'storage for support information' 1206. Since the above configuration is the same as that of the first embodiment, only a description of the storage for support information as the difference from the first embodiment is provided hereinbelow.

The 'storage for support information' is configured to store support information for determining whether or not the instruction is to be selected by the selector for instruction according to the ability of an arbitrary client to execute each instruction and the property of each instruction

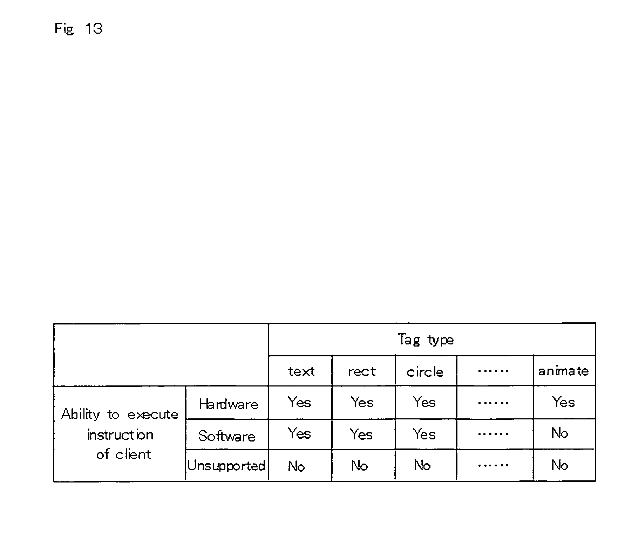

The 'property of instruction' indicates a property defining the instruction. For example, the tag type is the 'property of instruction'. In this case, as the support information, the data as shown in Fig. 13 is stored. Here, when it is unsupported at the client end, the instruction including the <text> tag is not selected by the selector for instruction and when it is supported by hardware or software, the instruction including the <text> tag is selected. In the case of the instruction including the <animate> tag, when it is unsupported or supported by software, the instruction including the <animate> tag is not selected, and only when it is supported by hardware, the instruction including the <animate> tag is selected. Here, when the attributes, whose abilities to execute instruction are different, are included in the same tag, the attribute to execute instruction may be determined based on the attribute, whose ability to execute instruction is low. For example, in the client 2 of Fig.2, as to the <rect> tag, the ability to execute instruction for the 'fill' attribute is different from that for the 'fill-opacity' attribute. In this case, as to the <rect> tag, it is determined based on the 'fill-opacity' attribute, whose ability to execute instruction is low, that the <rect> tag is 'supported by software'. Additionally, each attribute included in the tag is set as 'property of instruction', and the support information may be stored with respect to attribute of each tag.

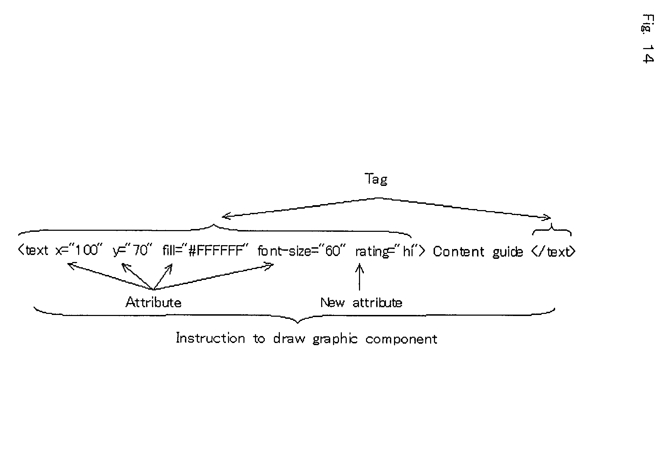

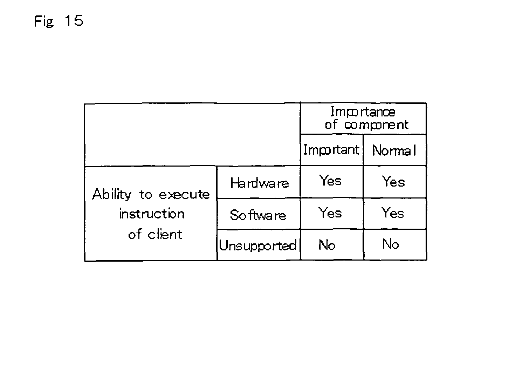

Moreover, an attribute newly added to the instruction may be as the 'property of instruction'. In Fig. 14, the <rating> tag (importance of the component) is added as a new attribute to a specific instruction, and this attribute is the 'property of instruction'. In this case, as the support information, the data as shown in Fig. 15 is stored. Here, the instruction, whose importance is 'high', is not selected by the selector for instruction when it is unsupported at the client. However, the instruction is selected when it is supported by hardware or software. Moreover, the instruction, whose importance is 'normal', is not selected when it is unsupported or supported by software at the client, and is selected only when it is supported by hardware. Here, although the importance is set in the two levels, 'high' and 'normal', it is possible to set the importance in more than two levels.

Moreover, the new attribute is not limited to the above <rating> (importance of component), and may be <datasize> (data size of the graphic component). When the <datasize> is set as the 'property of instruction', it is possible to determine whether or not the instruction to draw the graphic component is selected according to whether or not the data size of each graphic component exceeds a specific standard size.

Note that, it is possible to set a simple identification code as the new attribute. For example, it is assumed that '0 or 1' as the identification code is added to a specific instruction. When support is carried out by hardware or software at the client, the instruction having the identification code '0' is selected, and the instruction having the identification code '1' is selected only when support is carried out by hardware at the client.

Hereinbelow, a difference between the group of instructions configured with respect to each client having different abilities to execute instruction when the 'property of instruction' is <rating> (importance of component) is concretely described. It is assumed that each client has the ability to execute instruction as shown in Fig. 5 of the first embodiment. Here, the clients 1 and 2 have different abilities to execute instruction for the 'rx, ry' and 'fill-opacity' of the <rect> tag and the <animate> tag. When the transmission request is sent for the graphic data including these instructions from each client, the selector for instruction selects the instruction based on the ability to execute instruction and the support information as shown in Fig. 15, so that different group of instructions are configured for each client.

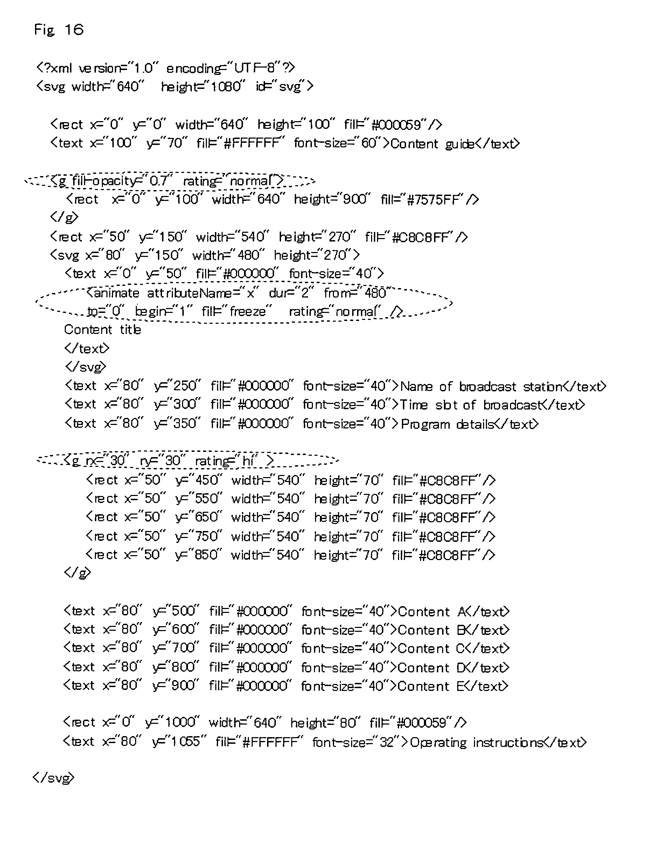

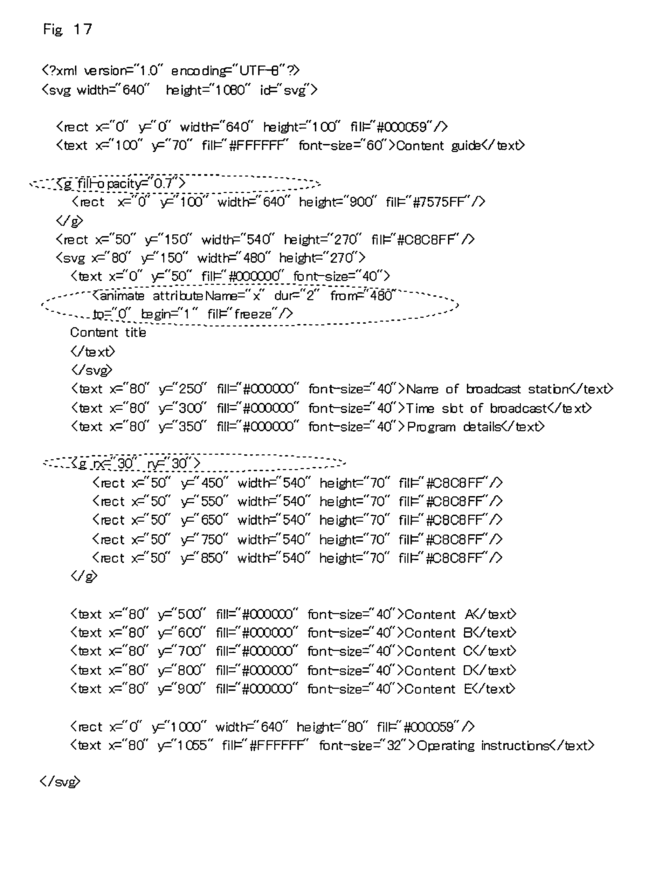

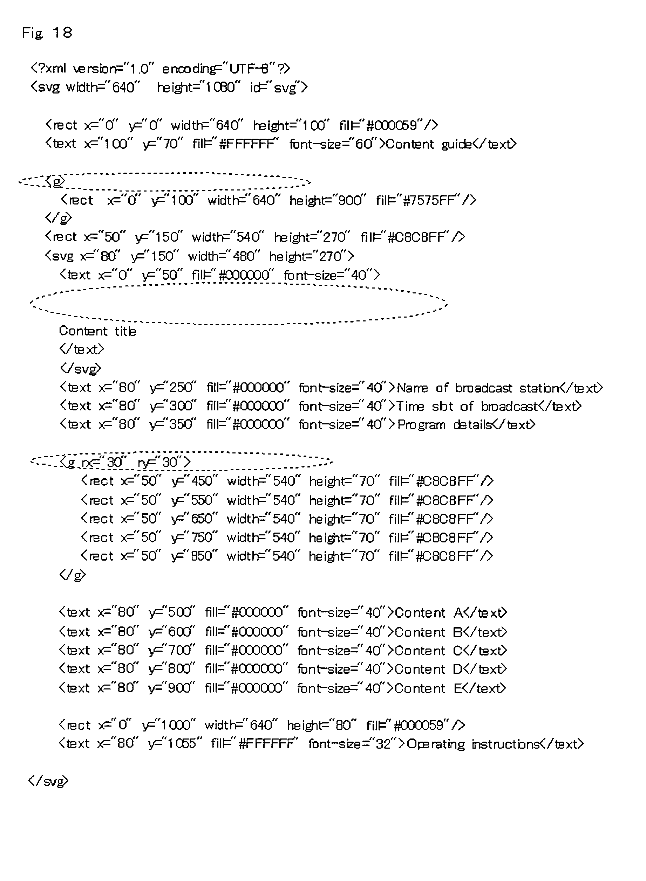

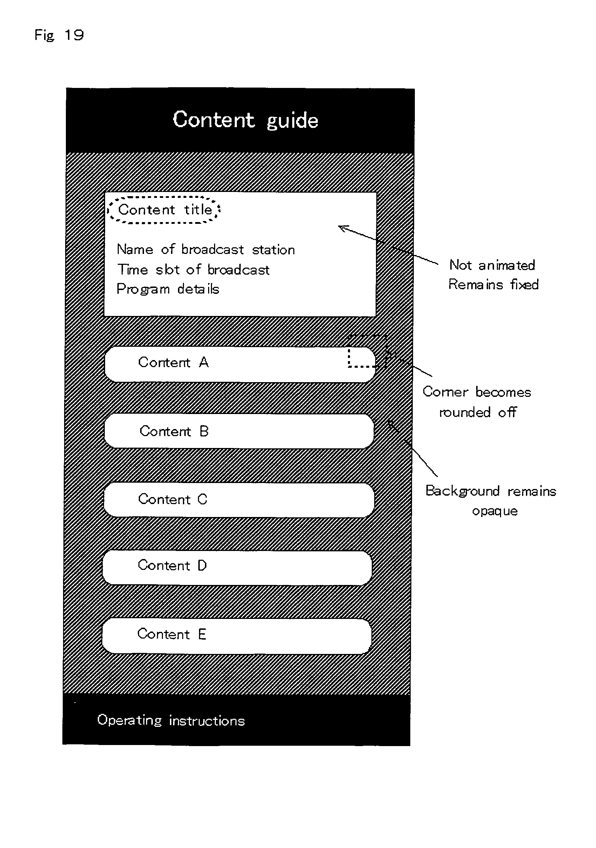

For example,, it is assumed that the XML data, where the <rating> attribute is added to instructions, for which each client has different ability to execute, is stored in the storage for instruction. If the XML data is executed without change, the graphic as shown in Fig. 7 is displayed. When each instruction is selected from the group of instructions indicated by this XML data based on the information of ability to execute instruction of the client 1 in Fig. 5 and the support information in Fig. 15, the XML data in Fig. 17 is configured. Although the <rating> attribute is unnecessary upon drawing the graphic at the client end, so that it is deleted, this <rating> attribute may be left. Since all instructions are supported by hardware at the client 1, the data is actually not different from the XML data in Fig. 16 existing in the storage for instruction. Therefore, if the XML data of the client 1 is executed, the graphic as shown in Fig. 7 is displayed. Meanwhile, when each instruction is selected based on the information of ability to execute instruction of the client 2 in Fig. 5 and the support information in Fig. 15, the XML data in Fig. 18 is configured. Although the 'rx, ry' and 'fill-opacity' attributes of the <rect> tag are supported by software at the client 2, the 'rx, ry' attribute of the <rect> tag, whose importance is 'high', is selected, and the 'fill-opacity' attribute of the <rect> tag, whose importance is 'normal', is not selected. Additionally, the <animate> tag is unsupported, so that it is not selected. Therefore, if the XML data of the client 2 is executed, the graphic as shown in Fig. 19 is drawn, so that the graphic is different from that of the client 1.

Note that, in the above case, it is 'selected' whether or not the instruction for each graphic component configuring the graphic is left as the data to be transmitted to the client, thereby configuring the group of instructions. When a plurality of instructions preliminarily exist as choices for each graphic component, it is possible to 'select' a specific instruction form the choices, thereby configuring the group of instructions.

### <Concrete Configuration of Second Embodiment>

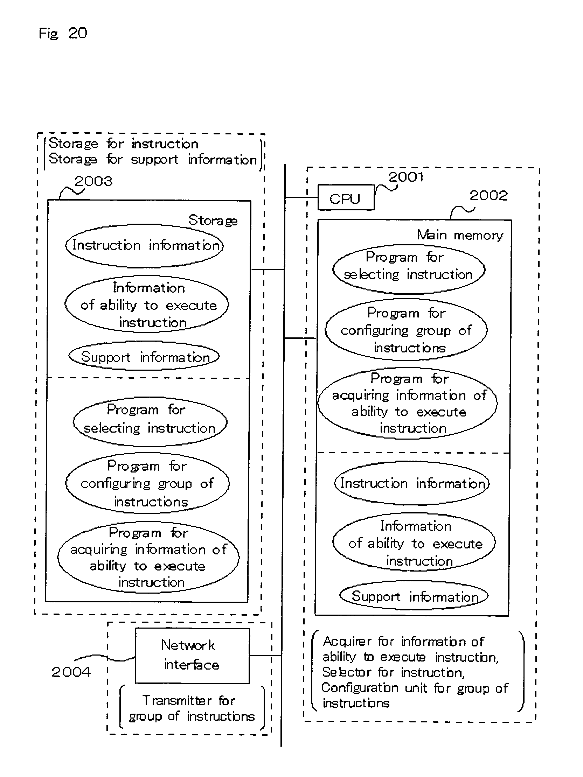

Subsequently, the respective hardware configurations of the transmitter for instruction concerning graphic of the second embodiment will be described. Fig. 20 is a schematic diagram showing an example of a hardware configuration of the transmitter for instruction concerning graphic of the second embodiment. The configuration is basically same as the hardware configuration of the apparatus of the first embodiment described with reference to Fig 10. However, the apparatus of the second embodiment stores the support information in the 'storage (or storage medium)'.

In the network interface, when receiving the transmission request for the group of instructions concerning graphic and the client ID, a program for acquiring information of ability to execute instruction stores the information of ability to execute instruction stored in the storage at a predetermined address in the main memory, searches for information correlated with the client ID, and extracts the information into another predetermined address in the main memory. Note that, in this case, although the information of ability to execute instruction of the client is preliminarily correlated with each client ID and is stored in the storage, it is also possible to acquire the information of ability to execute instruction directly from the client simultaneously with the reception of the transmission request for the group of instructions concerning graphic.

When the information of ability to execute instruction of the client, which has sent the transmission request, is stored in the main memory, a program for selecting instruction acquires the support information and the group of instructions concerning graphic (instruction information) as the target of the transmission request from the storage, and stores the group of instructions at a predetermined address in the main memory. Note that the group of instructions concerning graphic can be externally acquire via the network interface. After that, based on the information of ability to execute instruction and the support information, the program for selecting instruction executes a processing for determining whether or not each instruction indicating the graphic component is selected.

A program for configuring group of instructions causes the CPU to execute a processing for configuring the group of instructions concerning graphic based on the processing result of the above program for selecting instruction. The configured group of instructions concerning graphic is transmitted to the client, which has sent the transmission request, via the network interface.

### <Processing Flow of Second Embodiment>

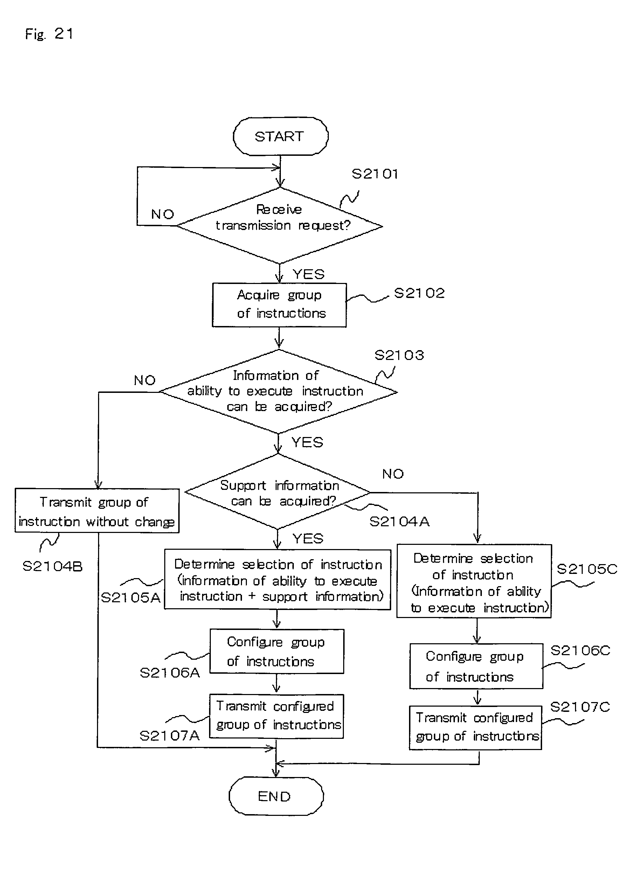

Fig. 21 is a flowchart showing processes in the transmitter for instruction concerning graphic of the second embodiment. Here, a step of recording for storage of support information for determining whether or not the instruction is to be selected by the selector for instruction according to the ability of an arbitrary client to execute each instruction and the property of each instruction is already executed. The processes in Fig. 21 include the following steps. At the outset, in step S2101, it is determined whether the transmission request for the graphic data from the client has been received. Here, if it is determined that the transmission request for the graphic data has been received, step S2102 is carried out. If it is determined that the transmission request for the graphic data has not been received, the processing stays in a standby state. In step S2102, the group of instructions, which is a target of the transmission request from the client, is acquired from the storage for instructions. In step S2103, it is determined whether or not the information of ability to execute instruction of the client, which has sent the transmission request, can be acquired. Here, if it is determined that the information of ability to execute instruction can be acquired, step S2104A is carried out. If it is determined that the information of ability to execute instruction cannot be acquired, step S2104B is carried out. This processing is mainly carried out by the acquirer for information of ability to execute instruction. In the step S2104B, the group of instructions acquired from the storage for instructions is transmitted to the client without change, and the processing is terminated. In the step S2104A, it is determined whether or not the support information for the graphic data as a target of the transmission request from the client can be acquired from the storage for support information. If it is determined that the acquisition is possible, step S2105A is executed. If it is determined that the acquisition is impossible, step S2105C is executed. The processes after the step S2105C are same as the processes after the step S 1104A in the <processing flow> of the first embodiment. In the step S2105A, it is determined according to the information of ability to execute instruction and the support information whether or not the instruction concerning each graphic component configuring the graphic screen is selected. This processing is mainly carried out by the selector for instructions. In step S2106A, the group of instructions to draw the graphic screen is configured according to the selection by the selector for instructions. This processing is mainly carried out by the configuration unit for group of instructions. In step S2107A, the group of instructions configured by the configuration unit for group of instructions is transmitted to the client, which has sent the transmission request. This processing is mainly carried out by the transmitter for group of instructions.

### <Brief Description of Effects of Second Embodiment>

According to the transmitter for instruction concerning graphic of the second embodiment, when the graphic data includes the instruction concerning the graphic component, for which the client has low-ability to draw and which is unnecessary to be drawn, it is possible to configure the graphic data not including such instruction, and to transmit the graphic data to the client, thereby preventing unnecessary consumption of the processing capacity of the client in comparison with the conventional technology.

## Claims

1. A transmitter for instruction concerning graphic, comprising:
an acquirer for information of ability to execute instruction, acquiring information of ability to execute instruction, which is information indicating an ability of a client to execute an instruction to draw a graphic component with respect to each graphic component;
a storage for instruction, associating the instruction for the client to draw the graphic component with the graphic component to be drawn, and executing storage thereof;
a selector for instruction, selecting the instruction with respect to each graphic component according to the information of ability to execute instruction in order to configure a group of instructions for generating a screen configured by a plurality of graphic components;
a configuration unit for group of instructions, configuring the group of instructions according to the selection; and
a transmitter for group of instructions, transmitting the configured group of instructions.

2. The transmitter for instruction concerning graphic according to Claim 1, further comprising:
a storage for support information, storing support information for determining whether or not the instruction is to be selected by the selector for instruction according to the ability of an arbitrary client to execute each instruction and the property of each instruction

3. A method for transmitting instruction concerning graphic, comprising the steps of:
acquiring information of ability to execute instruction, which is information indicating an ability of a client to execute an instruction to draw a graphic component with respect to each graphic component, from the client;
associating the instruction for the client to draw the graphic component with the graphic component to be drawn, and executing storage thereof;
selecting the instruction with respect to each graphic component according to the information of ability to execute instruction in order to configure a group of instructions for generating a screen configured by a plurality of graphic components;
configuring the group of instructions according to the selection; and
transmitting the configured group of instructions.

4. The method for transmitting instruction concerning graphic according to Claim 3, further comprising the step of:
recording for storage of support information for determining whether or not the instruction is to be selected by the selector for instruction according to the ability of an arbitrary client to execute each instruction and the property of each instruction.
